# EUROPEAN PATENT APPLICATION

(11) **EP 2 862 780 A2**
(43) Date of publication of application: **22.04.2015**
(21) Application number: 14182886.3
(22) Date of filing: 29.08.2014
(51) Int. Cl.: B62B 5/00, A61H 3/04

(54) **Mobile object**

(30) Priority: 30.08.2013 JP 2013180198
(71) Applicant: Funai Electric Co., Ltd., Daito city Osaka 574-0013 (JP)
(72) Inventor: Tanaka, Hideyuki, OSAKA, Osaka 574-0013 (JP)
(74) Representative: Osha Liang SARL

(57) **Abstract**

A mobile object (1) includes a vehicle body (10), a grip attached to the vehicle body, a detector that detects a value of pressure applied to the grip by a user of the mobile object, a wheel system (30) for moving the vehicle body (10), a wheel driver that drives the wheel system (30), and a controller that controls the wheel driver as the user walks while holding onto the grip and that performs braking to decelerate a rotation speed of the wheel system (30) when the detected value of the detector satisfies a predetermined condition.

## Description

### [FIELD OF THE INVENTION]

The present invention generally relates to a mobile object such as a manually propelled vehicle.

### [Related Art]

In recent years, the installing of power-assist functions into manually propelled vehicles (one form of a mobile object being, for example, an ambulatory assist vehicle to support elderly people with a weak physique or people with trouble walking, to go out) has been studied. This type of manually propelled vehicle is generally configured to drive forward by being gripped by a user.

With a manually propelled vehicle comprising a power-assist function, human power can be assisted when used by a user. Therefore, for example, operations that require a large force, such as carrying a heavy load, can be carried out relatively easily.

### [Patent Literature]

[Patent Literature 1] Japanese Unexamined Patent Application Publication No. 2013-123940

However, with the manually propelled vehicle described above, while an operation that requires a large force is made easier by the power-assist function, stopping the vehicle with only a wire braking operation or the like may become difficult.

Therefore, there is a need to devise a good way so that even a weak user can perform an easy braking operation (including an operation to reduce vehicle speed in addition to stopping the vehicle). In conventional art, the form of the braking operation does not consider actual circumstances of the mode of use of the manually propelled vehicle.

For example, the braking operation may be performed urgently to ensure safety or the like. Therefore, the braking operation is not performed intuitively and quickly enough for the user. Further, the user may release a hand accidentally while the manually propelled vehicle is being driven. If the vehicle is designed to reduce the speed by considering such events as a braking operation, safety can be sufficiently ensured.

### [Summary of the Invention]

One or more embodiments of the present invention provide a mobile object that can realize a braking operation in an appropriate form while having a power-assist function.

A mobile object according to one or more embodiments may comprise a vehicle body; a grip attached to the vehicle body; a detector that detects a value of pressure applied to the grip by a user of the mobile object; a wheel system for moving the vehicle body; a wheel driver that drives the wheel system; and a controller that controls the wheel driver as the user walks while holding onto the grip and that performs braking to decelerate a rotation speed of the wheel system when the detected value of the detector satisfies a predetermined condition.

The mobile object according to one or more embodiments enables a braking operation in an appropriate form while having a power-assist function. Further, according to one or more embodiments, the detector may be a pressure sensor provided on the grip.

According to one or more embodiments, the predetermined condition may be satisfied when the detected value exceeds a first predetermined threshold. According to one or more embodiments, the predetermined condition may be satisfied when the detected value is lower than a second predetermined threshold.

The mobile object according to one or more embodiments may further comprise a threshold setting unit that sets the first predetermined threshold, stores a history of detected values that exceed the first predetermined threshold, and updates the first predetermined threshold based on the history of the detected values. Further, according to one or more embodiments, the threshold setting unit may set the first predetermined threshold to be a mean value of all the detected values stored in the history. Furthermore, the mobile object according to one or more embodiments may further comprise a mode setting unit that sets any of a plurality of user modes, wherein the threshold setting unit may set the first predetermined threshold for each of the user modes.

Moreover, the mobile object according to one or more embodiments may further comprise a mode setting unit that sets any of a plurality of user modes based on an output of the detector that exceeds the first predetermined threshold and on predetermined reference information for each of the plurality of user modes.

According to one or more embodiments, the controller may determine a pattern of a driving force for each of the plurality of user modes, and the wheel driver may drive the wheel system based on the pattern associated with each of the plurality of user modes.

A mobile object according to one or more embodiments may comprise: a vehicle body; a grip attached to the vehicle body; a wheel system for moving the mobile object; a wheel driver that drives the wheel system; a brake lever operated by the user when applying a wire brake; and a controller that controls the wheel driver as the user walks while holding onto the grip and that performs braking to control to decelerate a rotation speed of the wheel system when a detected value of the brake lever exceeds a default value.

According to one or more embodiments, the braking may be an operation to set a target rotation speed of a motor driving the wheel system to zero.

According to one or more embodiments, a control method for controlling a mobile object comprising a vehicle body, a grip attached to the vehicle body to be gripped by a user walking with the mobile object, and a wheel system for moving the mobile object may comprise: driving the wheel system as the user walks while holding onto the grip; detecting a value of pressure applied to the grip; and controlling the driving to decelerate a rotation speed of the wheel system when the detected value satisfies a predetermined condition.

The mobile object according to one or more embodiments of the present invention enables a braking operation in an appropriate form while having a power-assist function.

### [BRIEF DESCRIPTION OF THE DRAWINGS]

FIG. 1 is an external view of a mobile object according to one or more embodiments when viewed from behind;
FIG. 2 is an external view of the mobile object according to one or more embodiments when viewed from the left side;
FIG. 3 is an external view of a vicinity of the handle of the mobile object according to one or more embodiments when viewed from behind;
FIG. 4 is a perspective view of the vicinity of the handle of the mobile object according to one or more embodiments;
FIG. 5 is a functional block diagram of the mobile object according to one or more embodiments of a first example;
FIG. 6 is a schematic plan view illustrating an example of one configuration of a wheel system and a wheel driver;
FIG. 7 is a functional block diagram illustrating an example of one configuration of the wheel drive functional part;
FIG. 8 is a plan view of the handle according to one or more embodiments;
FIG. 9 is an explanatory diagram that relates to a brake lever according to one or more embodiments;
FIG. 10 is an explanatory diagram that relates to a mode of use of the mobile object according to one or more embodiments;
FIG. 11 is a flowchart of a process that relates to the braking or brake control operation of one or more embodiments of the first example;
FIG. 12 is a flowchart of a process that relates to the braking or brake control operation of one or more embodiments of a second example;
FIG. 13 is a functional block diagram of a mobile object according to one or more embodiments of a third example;
FIG. 14 is a flowchart of a process that relates to the braking or brake control operation of one or more embodiments of the third example;
FIG. 15 is a functional block diagram of a mobile object according to one or more embodiments of a fourth example;
FIG. 16 is an explanatory diagram that relates a memory according to one or more embodiments of the fourth example;
FIG. 17 is a flowchart of a process that relates to the braking or brake control operation of one or more embodiments of the fourth example;
FIG. 18 is a functional block diagram of a mobile object according to one or more embodiments of a fifth example;
FIG. 19 is an explanatory diagram that relates a memory according to one or more embodiments of the fifth example; and
FIG. 20 is a flowchart of a process that relates to the braking or brake control operation of one or more embodiments of the fifth example.

### [Detailed Description of Embodiments of the Invention]

Embodiments of the present invention will be described hereinafter with reference to an example each of the first to fifth examples.

### 1. First Example

### [Configuration and the like of Mobile Object]

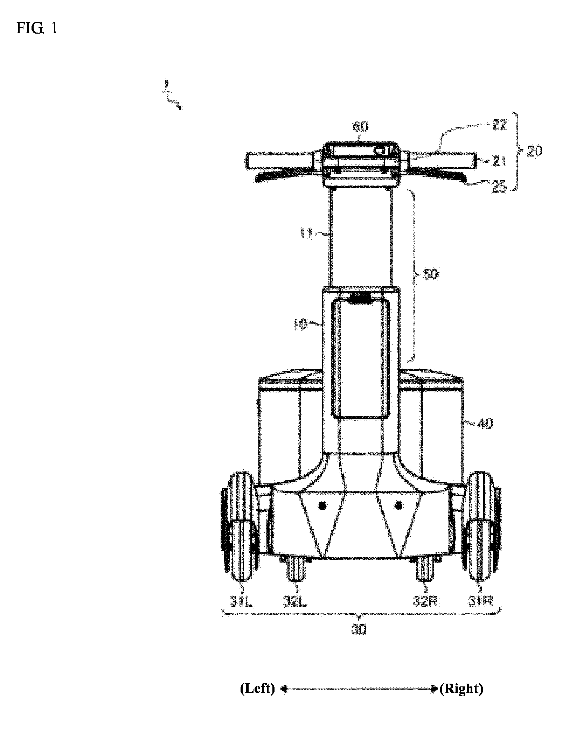

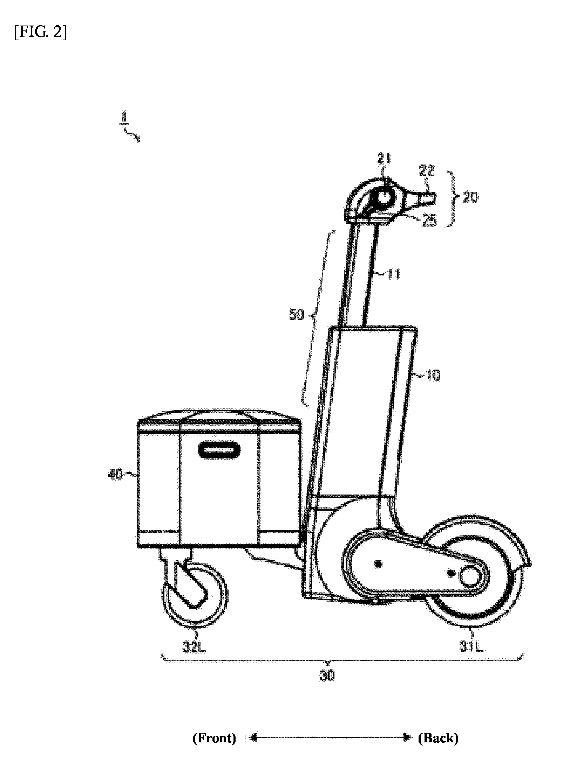

First, one or more embodiments of a first example will be described. FIG. 1 is an external view of a mobile object 1 (e.g., manually propelled vehicle such as an ambulatory assist vehicle) when viewed from behind, and FIG. 2 is an external view of the mobile object 1 when viewed from the left side. The directions of forward, backward, left, and right in the descriptions thereafter are the directions illustrated in FIG. 1 and FIG. 2 unless otherwise specified.

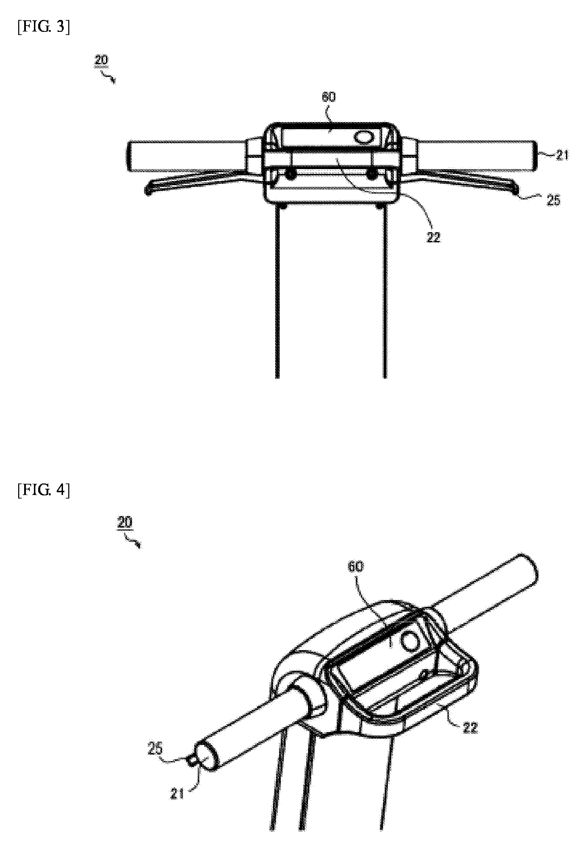

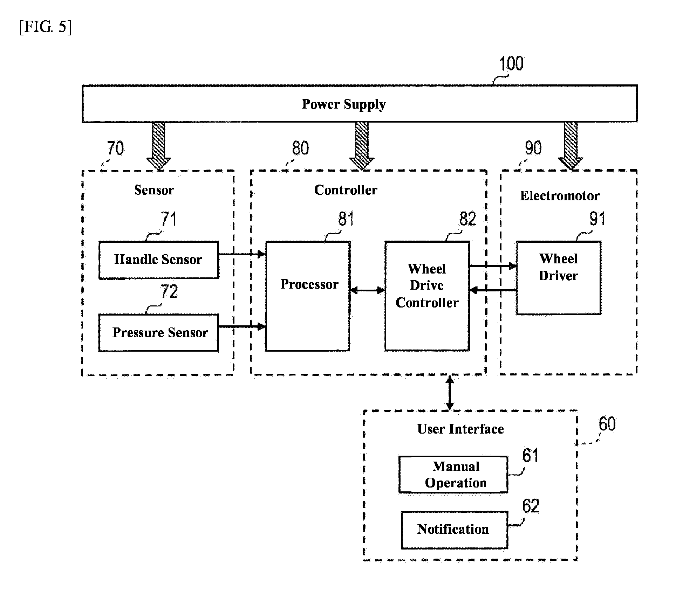

FIG. 3 is an external view of a vicinity of the handle of the mobile object 1 when viewed from behind. Further, FIG. 4 is a perspective view of the vicinity of the handle of the mobile object 1. Furthermore, FIG. 5 is a functional block diagram of the mobile object 1. A configuration and the like of the mobile object 1 are described with appropriate reference to each drawing described above.

The mobile object 1 may be a manually propelled vehicle (a so-called walker) to assist walking of a user (mainly elderly with a weak lower body) and may be used as a basket for carrying baggage and a seat for resting. The mobile object 1 may comprise a vehicle body 10, a handle 20, a wheel system 30, a baggage compartment 40, a backrest 50, a user interface 60, a sensor 70, a controller 80, an electromotor 90, and a power supply 100.

The vehicle body 10 may be a chassis of the mobile object 1 (framework) on which each of the configuration elements 20 to 100 listed above may be mounted. Stainless steel, aluminum alloy, or the like may be used for the frame material forming the vehicle body 10.

The handle 20 may be a member where the user grips at the time of walking and is connected to a strut member 11 of the vehicle body 10. The user can drive the mobile object 1 by applying human power through gripping both ends of the handlebar 21 with both hands.

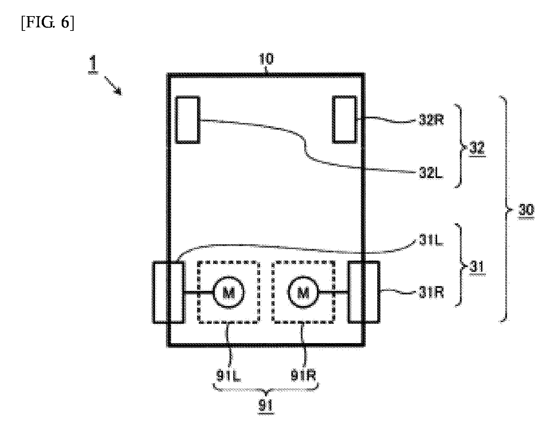

The wheel system 30 may comprise one or several annular wheels in order to move the vehicle body 10 along the ground by rotating in harmony with the walking of the user. The wheel system 30 may comprise at least one drive wheel. The wheel system 30 may comprise drive wheel(s) and idler wheel(s). FIG. 6 is a schematic plan view illustrating an example of one configuration of the wheel system 30 and a wheel driver 91. As illustrated in FIG. 6, the wheel system 30 may be a four-wheel structure comprising drive wheels 31 (left and right drive wheels 31L and 31R) that are rotated at the axle center by human power (or auxiliary power) and idler wheels 32 (left and right idler wheels 32L and 32R) for turning direction. The left and right drive wheels (31L and 31R) may be driven and controlled independently on the rotation speed and rotation direction respectively by the wheel driver (91L and 91R) corresponding to each.

The baggage compartment 40 may be a box-shape member that can store personal belongings inside. A cushion member may be attached on the upper lid of the baggage compartment 40, and may function as a seating surface for the user to sit on.

The backrest 50 may be a plate-like member for the user to lean back against when seated. In one or more embodiments of the present example, the vehicle body 10 and the strut member 11 are designed to be relatively wide and be diverted as the backrest 50.

The user interface 60 may be means for exchanging information between the user and the controller 80, and may comprise, for example, a manual operation 61 (such as an ON/OFF switch button of the electromotor assistance function) and a notification 62 (such as a speaker, light-emitting diode, liquid crystal display panel). The user interface 60 may be provided at a position where the user can easily operate (for example, the handle 20 may be near the height of the eyes of the user).

The sensor 70 may be used to monitor surrounding conditions, usage condition of the mobile object 1, a walking posture of the user, or the strength of the grip force. In one or more embodiments of the present example, the sensor 70 may comprise a handle sensor 71 that detects a displacement state of the handlebar 21 and a pressure sensor 72 (pressure sensor is used to collectively describe a left side pressure sensor 72L and a right side pressure sensor 72R, each of which will be described in greater details below) that detects the gripping strength of the user (grip strength). The pressure sensor 72 may be, for example, a capacitance type pressure sensor, or a load cell, strain gauge, piezo element, one used a pressure-sensitive conductive rubber, or one formed by a combination thereof.

The controller 80 may be a logic circuit (such as a microcomputer) that comprehensively controls the user interface 60, sensor 70, and electromotor 90. The controller 80 may comprise a processor 81 and a wheel drive controller 82 as functional blocks to realize power assistance according to an intent of the user by setting various parameters (rotation direction of the motor, rotation speed, and each target value of the rotation torque) of the wheel driver 91 according to the output of the handle sensor 71.

The processor 81 may determine a driving target value of the left and right drive wheels (31L and 31R) according to an output of each sensor provided in the sensor 70. The wheel drive controller 82 may control the rotation direction and the rotation speed of the left and right drive wheels (31L and 31R) respectively and individually according to the driving target values described above.

The electromotor 90 may be means to drive each component of the mobile object 1 by electromotor according to an instruction from the controller 80 and comprising the wheel driver 91. The wheel driver 91 may electrically drive the left and right drive wheels (31L and 31R) that are a part of the wheel system 30 according to an instruction from the controller 80. As illustrated in FIG. 6, the left and the right wheel drivers (91L and 91R) may be provided individually in order to control the left and the right drive wheels (31L and 31R) independently.

The power supply 100 may be means for supplying the electric power to the user interface 60, sensor 70, controller 80, and the electromotor 90. A secondary battery (such as a nickel-hydrogen battery or lithium-ion battery) attaching to the vehicle body 10 in a removable manner may be used as the power supply 100.

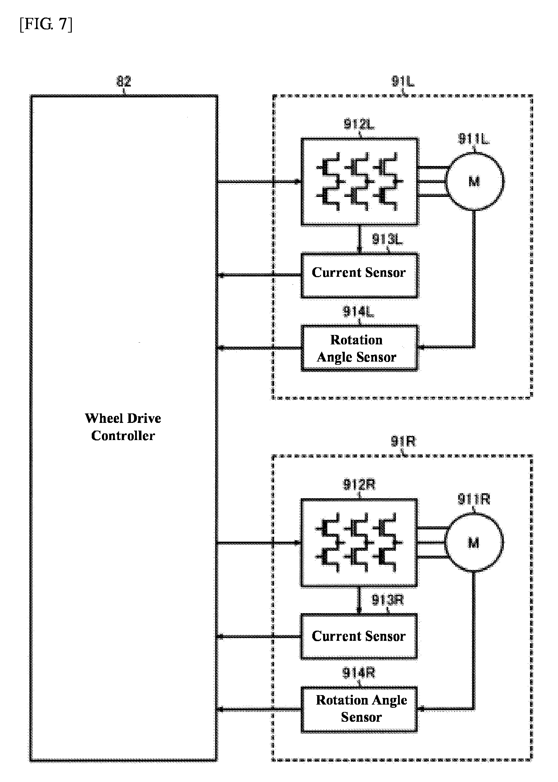

FIG. 7 is a functional block diagram illustrating an example of one configuration of the wheel driver (91L and 91R). The wheel driver 91L may comprise a motor 911L, a motor driver 912L, a current sensor 913L, and a rotation angle sensor 914L. Further, the wheel driver 91R may comprise a motor 911R, a motor driver 912R, a current sensor 913R, and a rotation angle sensor 914R.

The motor 911L may rotate and drive the left drive wheel 31L independently. The motor driver 912L may be an inverter circuit for generating a drive current for the motor 911 L according to a control signal from the controller 80. The current sensor 913L may detect a drive current supply to the motor 911L. The rotation angle sensor 914L may detect the rotation angle of the motor 911L.

The motor 911R may rotate and drive the right drive wheel 31R independently. The motor driver 912R may be an inverter circuit for generating a drive current for the motor 911R according to a control signal from the controller 80. The current sensor 913R may detect a drive current supply to the motor 911R. The rotation angle sensor 914R may detect the rotation angle of the motor 911R.

The wheel drive controller 82 may perform feedback control of each of the motor drivers (912L and 912R) to match the rotation direction and rotation speed of the motors 911L and 911R with the target values according to outputs of each of the current sensors (913L and 913R) and each of the rotation angle sensors (914L and 914R).

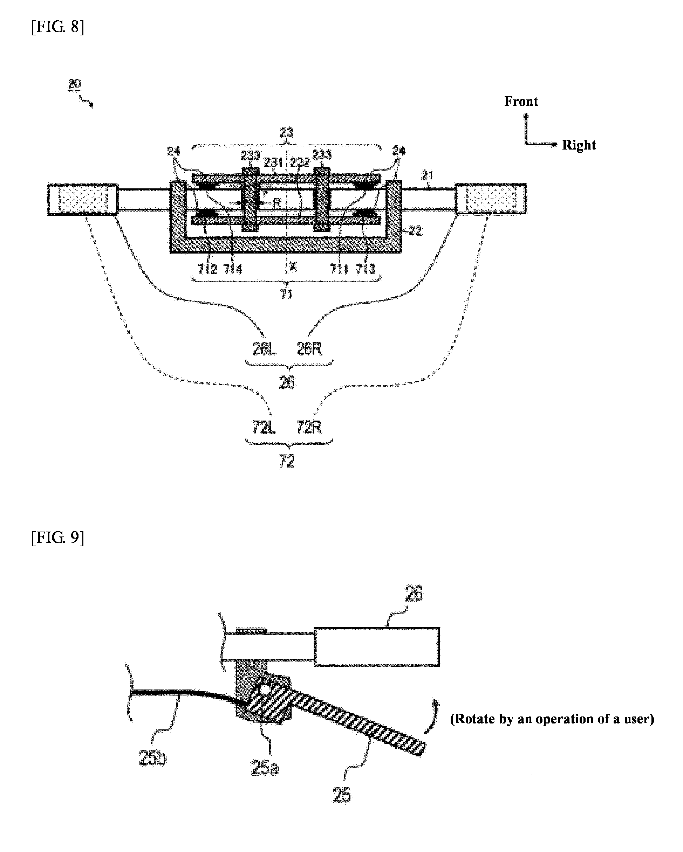

FIG. 8 is a plan view of a handle 20 (when the exterior member is removed). The handle 20 may comprise a handlebar 21, a middle handle 22, and a handle holder 23, a neutral holding section 24, and a brake lever 25.

FIG. 8 is a plan view of the handle 20 when viewed from above; however, an engaging portion (mating portion of a guide pin 233) between the handlebar 21 and the handle holder 23 is illustrated in a horizontally cross-sectional view for purposes of better illustrating the structure.

The handlebar 21 may be a rod-like member for the user to grip with both hands, and provided to extend in a lateral direction. Near the two ends of the lateral direction (lengthwise direction), a left grip 26L and a right grip 26R (hereinafter, these may be referred to as "grip 26" collectively) may be provided so that the user can grip the handlebar 21 with both hands easily.

The left grip 26L may be a portion where the user grips with left hand, and may comprise the left side pressure sensor 72L. The left side pressure sensor 72L may be suitably disposed so that the gripping force of the left grip 26L by the user can be detected accurately. The left side pressure sensor 72L may be, for example, a thin sheet-like form wrapped around the left grip 26L.

The right grip 26R may be a portion where the user grips with right hand, and may comprise the right side pressure sensor 72R. The right side pressure sensor 72R may be suitably disposed so that the gripping force of the right grip 26R by the user can be detected accurately. The right side pressure sensor 72R may be, for example, a thin sheet-like form wrapped around the right grip 26R.

Further, a handle sensor 71 that detects a displacement state of the handlebar 21 may be mounted on a surface of the handlebar 21. A first sensor 711, a second sensor 712, a third sensor 713, and a fourth sensor 714 may be provided as the handle sensor 71.

The first sensor 711 may be provided on a front side of a first region nearer to a right end than a middle of the lengthwise handlebar 21, and detect that the first region of the handlebar 21 is displaced in a forward direction from a predetermined neutral position by detecting contact with a first contact surface 231 (surface facing the front of the handlebar 21) of a handle holder 23.

The second sensor 712 may be provided on a back side of a second region nearer to a left end than the middle of the lengthwise handlebar 21, and detect that the second region of the handlebar 21 is displaced in a rearward direction from the predetermined neutral position by detecting contact with a second contact surface 232 (surface facing the back of the handlebar 21) of the handle holder 23.

The third sensor 713 may be provided at the back side of the first region (opposite to the first sensor 711) of the handlebar 21, and detect that the first region of the handlebar 21 is displaced in the rearward direction from the neutral position by detecting contact with the second contact surface 232.

The fourth sensor 714 may be provided at the front side of the second region (opposite to the second sensor 712) of the handlebar 21, and may detect that the second region of the handlebar 21 is displaced in the forward direction from the neutral position by detecting a contact with the first contact surface 231.

The first to fourth sensors (711 to 714) are all pressure-sensitive electrically conductive elements that convert a change in pressure to a change in electrical resistance. However, the first to fourth sensors 711 to 714 are not limited to the pressure-sensitive electrically conductive elements, and may be, for example, a mechanical switch, an optical sensor, or other known apparatuses that detect proximity/deviation between the handlebar 21 and the handle holder 23.

The middle handle 22 may be a U-shaped member for the user to grip with one hand. The middle handle 22 may be rigidly coupled between two points of the middle portion in the lengthwise direction of the handlebar 21, so that the operation force applied to the middle handle 21 is transferred to the handle bar 21. Accordingly, the user can use the mobile object 1 by operating the middle handle 22 with one hand even when the user cannot operate the handle bar 21 using both hands (such as when holding an umbrella in one hand). The installation of the middle handle 22 may be omitted.

The handle holder 23 may be fixed to the strut member 11 of the vehicle body 10, and support the handlebar 21 while allowing a displacement of the handlebar 21 within a predetermined range. The handle holder 23 may comprise two guide pins 233 (diameter: r) where both ends are held by the first contact surface 231 and the second contact surface 232. The guide pin 233 may be fitted to a guide pin fitting hole of the handlebar 21. Accordingly, the displacement of the handlebar 21 is fundamentally restricted to the axial direction (front and back direction).

The diameter R of the guide pin fitting hole drilled into the handlebar 21 may be designed to be slightly larger than the diameter r of the guide pin 233. That is, an intentional fitting play may be provided to the handle holder 23. Therefore, the handlebar 21 is not only displaced in the forward and the rearward directions, but also displaced in the left and the right turning directions within the predetermined range (within the play range by the fitting play) by receiving the operation force by the user.

The neutral holding section 24 may be a member for biasing back the handlebar 21 to the neutral position. According to one or more embodiments of the present example, an elastic member may be provided between the handlebar 21 and the handle holder 23 as the neutral holding section 24. For the elastic member, sponge, rubber in which a variety of hardness is selectable, or a metal, resin, or other materials having resilient properties such as a leaf spring may be suitably used. Further, when each sensor (711 to 714) is made of an elastic member, an elastic member may not be provided in each local contact location.

A brake lever 25 may be a lever operated by the user when applying a friction brake by using a wire brake. The brake lever 25 may be provided near the grips 26 of both the left and the right sides, respectively, (where the user can grip the grip 26 and the brake lever 25 together) as illustrated in FIG. 9 (cross-sectional view near the brake lever 25). The brake lever 25 may be supported in a pivotal manner around a pivotal axis 25a and may be connected to a brake shoe, not illustrated, via a brake wire 25b.

When the user operates the brake lever 25 (for example, grasping both the grip 26 and the brake lever 25 firmly), the brake lever 25 may be rotated in the direction closer to the grip 26. Accordingly, the brake wire 25b may be pulled towards the brake lever 25b and the brake shoe may be pressed against the wheel system 30 (e.g. against at least one wheel of the wheel system 30).

The more force the user operates the brake lever 25 with, the greater the operation amount (rotation amount) of the brake lever 25 increases and a larger friction is generated between the brake shoe and the wheel system 30 (e.g. between the brake shoe and at least one wheel of the wheel system 30). Therefore, when the user operates the brake lever 25 with a sufficient force, the friction brake can be applied to the mobile object 1.

However, there may be concern that operating the brake lever 25 with sufficient force may be difficult and that the wire brake may not be properly applied by a weak user. Accordingly, one or more embodiments of the present example may be configured so that even a weak user can apply the brake easily. Detailed description pertaining to making the braking mechanism easier to apply is provided below. The installation of the wire brake (including brake lever 25) may be omitted with the exception of one or more embodiments of a third example described later.

### [Power-Assist Function]

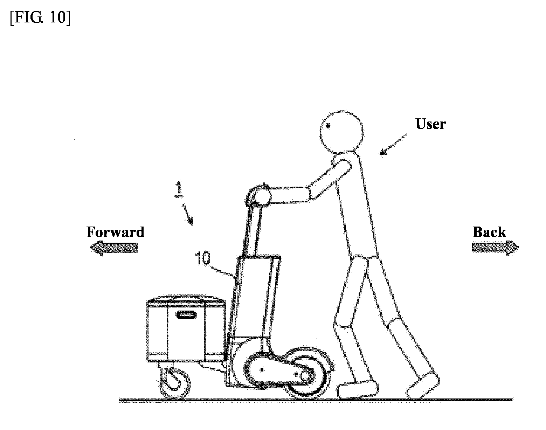

A mobile object 1 according to one or more embodiments is illustrated in FIG.10. For example, the user may walk while propelling or moving the vehicle body 10 by gripping the grip 26 with both hands. At that time, the controller 80 controls the electromotive drive of the drive wheel 31 to give power assistance (e.g., electromotor assistance).

When the mobile object 1 is moving forward, the contact of a first contact surface 231 with both the first sensor 711 and the fourth sensor 714 may be detected by the handlebar 21 as the handlebar 21 is pushed in the forward direction by the user. At that time, the controller 80 may set various parameters of the wheel driver 91L and 91R to give identical forward torque to the drive forces DL and DR in the drive wheels 31L and 31R. With this type of power assistance, the user can move the mobile object 1 forward smoothly and safely.

When the mobile object 1 is moving rearward, contact with a second contact surface 232 is detected by both the second sensor 712 and the third sensor 713 as the handlebar 21 is pulled in the rearward direction by the user. At that time, the controller 80 may set various parameters of the wheel driver 91L and 91R to give identical rearward torque to the drive forces DL and DR in the drive wheels 31L and 31R. With this type of power assistance, the user can move the mobile object 1 rearward smoothly and safely.

When the mobile object 1 is turning right, the contact with the second contact surface 232 may be detected by the third sensor 713 and the contact with the first contact surface 231 may be detected by the fourth sensor 714 as the handlebar 21 is twisted in the right turning direction by the user. At that time, the controller 80 may set various parameters of the wheel driver 91L and 91R to give different forward torques (DL<DR) as the drive forces DL and DR of the drive wheels 31L and 31R. With these power assistances, the user can turn the mobile object 1 to the right smoothly and safely.

When the mobile object 1 is turning left, contact with the first contact surface 231 may be detected by the first sensor 711 and contact with the second contact surface 232 may be detected by the second sensor 712 as the handlebar 21 is twisted in the left turning direction by the user. At that time, the controller 80 may set various parameters of the wheel driver 91L and 91R to give different forward torques (DL>DR) as the drive forces DL and DR of the drive wheels 31L and 31R. With this type of power assistance, the user can turn the mobile object 1 to the right smoothly and safely.

### [Brake control operation or braking]

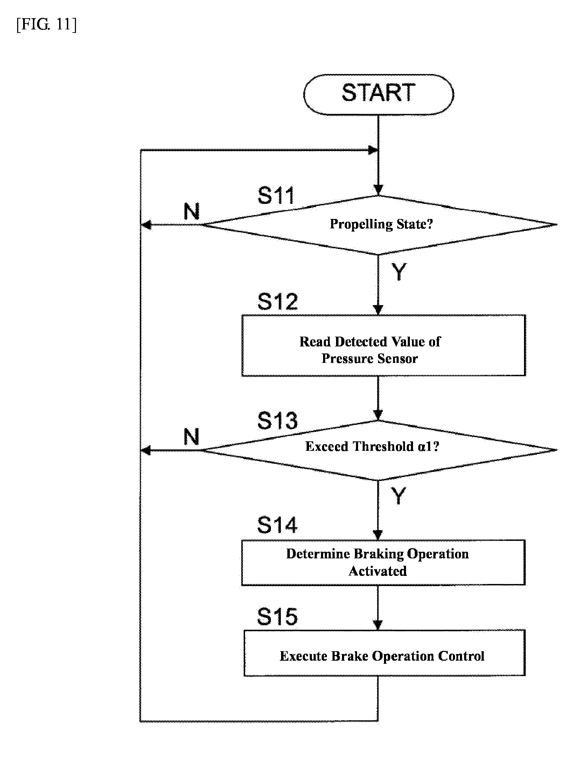

Further, the controller 80 may execute a brake control operation or braking when the detected result of the pressure sensor 72 satisfies a predetermined condition, e.g., when a value detected by the pressure sensor 72 exceeds or falls below a certain value. A description of a series of processes relating to the brake control operation is given below with reference to a flowchart illustrated in FIG. 11.

The controller 80 may monitor whether the mobile object 1 is in a propelling state (forward, backward, turning right or turning left) (step S11). When the mobile object 1 is in the propelling state (Y in step S11), the controller 80 may read the current detected value of the pressure sensor 72 (step S12).

Then, the controller 80 may determine whether the detected value of the pressure sensor 72 exceeds the predetermined threshold α1 (step S13). The threshold α1 may be set in advance or predetermined as a value corresponding to the situation where a relatively weak user grips the grip 26 with some strength. That is, the threshold α1 may be set appropriately so that weak users can easily apply the braking operation.

According to the result of the determination, when the detected value does not exceed the threshold α1 (N in step S13), the controller 80 may repeat the operation of step S11. On the other hand, when the detected value exceeds the threshold α1 (Y in step S13), the controller 80 may determine that the braking operation is activated (step S14) and execute the brake control operation (step S 15). In one or more embodiments of the present example, the operation in which the detected value of the pressure sensor 72 may be caused to exceed the threshold α1 by a stronger gripping force on the grip 26 corresponds to a braking operation.

Further, the brake control operation may control the electromotive drive of the drive wheel 31 to reduce the rotation speed, and may be, for example, an operation that sets the target rotation speed of the motor 911, which drives the drive wheel 31, to zero. However, the specific form of the brake control operation is not limited thereto, but a variety of operations that can control the mobile object 1 may also be applicable to the brake control operation.

By performing the brake control operation, the rotation of the motor 911 may decelerate gradually. When the rotation speed of the motor 911 (or the drive wheel 31) becomes zero or a sufficiently small value, the purpose of the brake control operation at that time is achieved. Thereafter, the controller 80 may repeat the operation of step S11.

The brake control operation may be performed when at least the left or the right detected value of the pressure sensor 72 exceeds the threshold α1, or when only detected values of the pressure sensors 72 of both the left and the right exceed the threshold α1.

Further, the break control operation may apply the brake on the left drive wheel 31L and the right drive wheel 31R simultaneously, or may apply the brake on these drive wheels individually. Furthermore, when applying the brake individually, the left drive wheel 31L may be braked when the detected value of the left side pressure sensor 72L exceeds the threshold α1, and the right drive wheel 31R may be braked when the detected value of the right side pressure sensor 72R exceeds the threshold α1.

By performing the series of operations described above (step S11∼S15), the braking operation can be carried out even by a weak user. Further, this braking operation may be operated by simply gripping the grip 26 with slight force, and is made so that the user can perform the operation instantly and intuitively. Therefore, the user can easily apply the braking operation even in urgent situations.

### 2. Second Example

Next, one or more embodiments of the second example will be described. In the following, a description will be given focusing on parts that are different from one or more embodiments of the first example, and the description of parts that are common is omitted.

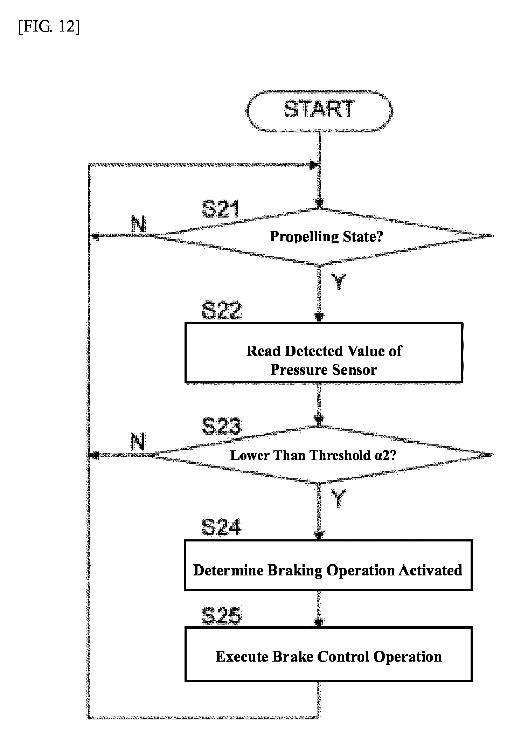

A series of processes of the brake control operation according to one or more embodiments of the second example will be described with reference to a flowchart shown in FIG. 12.

A controller 80 may monitor whether the mobile object 1 is in a propelling state (step S21). When the mobile object 1 is in a propelling state (Y in step S21), the controller 80 may read a detected value of the current pressure sensor 72 (step S22).

Then, the controller 80 may determine whether the detected value of the pressure sensor 72 is lower than a predetermined threshold α2 (step S23). The threshold α2 may be set in advance as a value corresponding to a condition where the user releases the hand from the grip 26. That is, the threshold α2 may be set suitably so that the braking operation is activated when the user releases the hand from grip 26.

From a result of the determination, when the detected value is not lower than the threshold α2 (N in step S23), the controller 80 may repeat the operation of step S21. On the other hand, when the detected value is lower than the threshold α2 (Y in step S23), the controller may determine that the braking operation is activated (step S24) and execute the brake control operation (step S25). That is, in one or more embodiments of the present example, the operation in which the detected value of the pressure sensor 72 is lower than the threshold α2 by releasing the hand from the grip 26 corresponds to the braking operation.

By performing the brake control operation, a motor 911 may reduce the rotation gradually. When the rotation speed of the motor 911 (or the drive wheel 31) is zero or a sufficiently small value, the purpose of the brake control operation is achieved. Subsequently, the controller 80 repeats the operation of step S21.

By performing the series of operations described above (steps S21 to S25), the braking operation can be easily carried out even by a weak user. Further, this braking operation may be activated even when the user releases the hand accidentally from the grip 26. Therefore, the braking operation may also prevent a situation where the mobile object 1 is driven against the will of the user.

### 3. Third Example

Next, one or more embodiments of the third example will be described. In the following, a description will be given focusing on parts that are different from one or more embodiments of the first example, and the description of parts that are common is omitted.

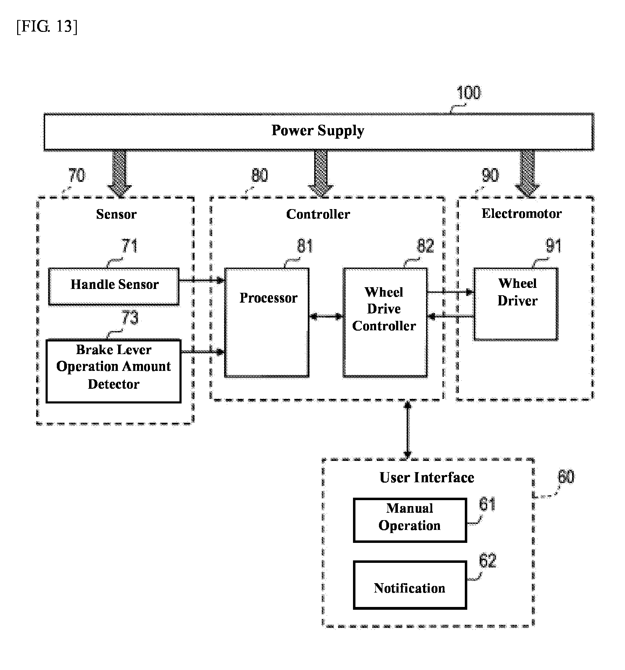

FIG. 13 is a functional block diagram of the mobile object 1 according to one or more embodiments of the third example. As illustrated in this diagram, a brake lever operation amount detector 73 may be provided instead of the pressure sensor 72 in the mobile object 1 of one or more embodiments of the third example.

The brake lever operation amount detector 73 may be means to detect the operation amount (rotation amount) of the brake lever 25. The brake lever operation amount detector 73 can be realized by using, for example, a wire displacement sensor, potentiometer, rotary encoder, Hall IC, or strain gauge.

In addition, when the wire displacement sensor is used, the wire displacement sensor may be attached to the brake wire 25b (see FIG. 9), and the displacement of the brake wire 25b may be converted to a resistance value. Further, when the potentiometer is used, the potentiometer may be attached to the pivotal axis 25a of the brake lever, and the rotation angle of the brake lever 25 may be converted to a resistance value. Use of such principles allows the operation amount of the brake lever 25 to be detected.

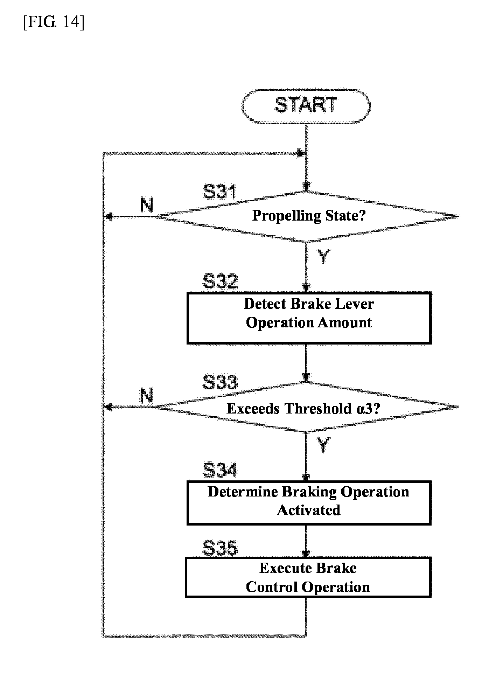

A series of processes of a brake control operation according to one or more embodiments of the third example will be described with reference to a flowchart shown in FIG. 14.

The controller 80 may monitor whether the mobile object 1 is in a propelling state (step S31). When the mobile object 1 is in the propelling state (Y in step S31), the controller 80 may detect an operation amount of the current brake lever 25 (step S32).

Then, the controller 80 may determine whether the operation value of the brake lever 25 exceeds a predetermined threshold α3 (step S33). The threshold α3 may be set in advance as a value corresponding to a condition where a relatively weak user operates the brake lever 25 with some strength. In other words, the threshold α3 may be set suitably so that even a weak user can easily carry out the braking operation.

From a result of the determination, when the operation amount does not exceed the threshold α3 (N in step S33), the controller 80 may repeat the operation of step S31. On the other hand, when the detected value exceeds the threshold α3 (Y in step S33), the controller may determine that the braking operation is activated (step S34) and execute the brake control operation (step S35). That is, in one or more embodiments of the present example, the operation in which the operation amount of the brake lever 25 is caused to exceed the threshold α3 by rotating the brake lever 25 to some extent corresponds to the braking operation.

By performing the brake control operation, a motor 911 may reduce the rotation gradually. When the rotation speed of the motor 911 (or the drive wheel 31) is zero or a sufficiently small value, the purpose of the brake control operation at that time is achieved. Subsequently, the controller 80 may repeat the operation of step S31.

By performing the series of operations described above (steps S31 to S35), the braking operation can be easily carried out even by a weak user. Further, this braking operation may be activated when the user tries to apply the wire brake, and the power assistance may be stopped as a result. Therefore, one or more embodiments of the mobile object 1 can prevent a situation where an opposing force is generated simultaneously such as applying the wire brake when the power assistance is performed.

### 4. Fourth Example

Next, one or more embodiments of a fourth example will be described. In the following, a description will be given focusing on parts that are different from one or more embodiments of the first example, and the description of parts that are common is omitted.

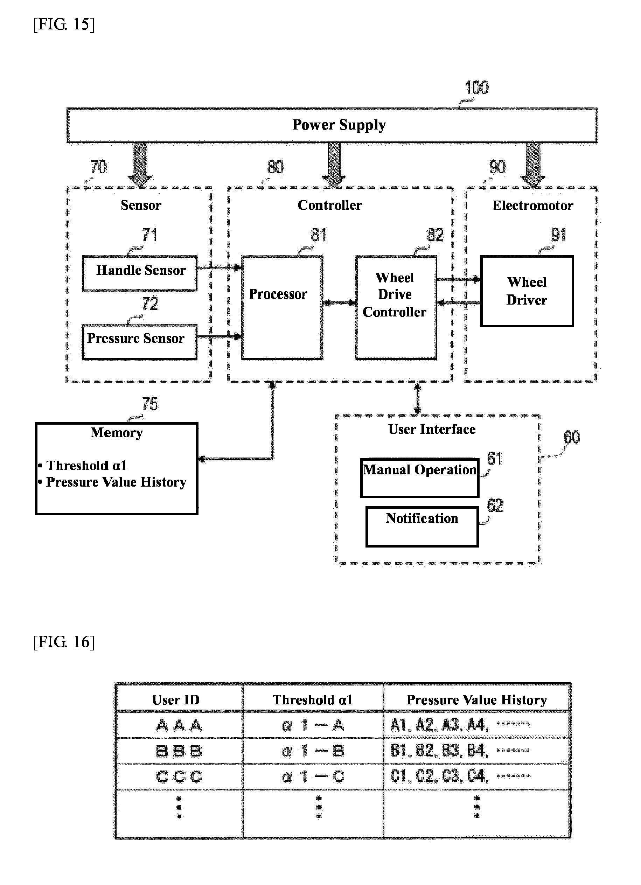

FIG. 15 is a functional block diagram of the mobile object 1 according to one or more embodiments of the fourth example. As illustrated in this diagram, a memory 75 may be provided in the mobile object 1 of one or more embodiments of the fourth example. The memory 75 may be configured by using, for example, non-volatile memory (such as flash memory) that is rewritable, and a variety of information is stored according to instructions by the controller 80.

FIG. 16 schematically illustrates the information stored in the memory 75. As illustrated in the figure, the "threshold α1" and "history of the pressure value" are stored in the memory 75 for each of a plurality of user IDs that is registered in advance. In one or more embodiments of the present example, the plurality user IDs can be registered in this way in the initial setting or the like on the assumption that a plurality of users share the mobile object 1.

Further, the initial value of the threshold α1 stored in the memory 75 may be determined, for example, based on the detected value of the pressure sensor 72 when the user initiates a braking operation at the time of the initial setting or the like, or may be used as a default standard value. The threshold α1 stored in the memory 75 may be updated with the history change of the pressure value as described later. The history of the pressure value stored in the memory 75, as is apparent from a description given below, may be a history of the pressure values of the braking operations that have been performed in the past.

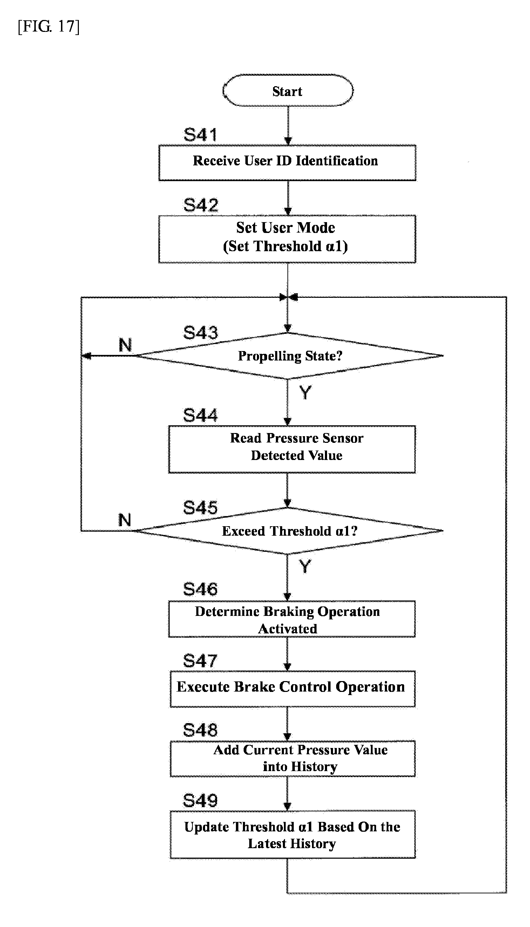

A series of processes of a brake control operation according to one or more embodiments of the fourth example will be described with reference to a flowchart shown in FIG. 17.

The controller 80 may receive an identification (any one of identifications from each user ID that are registered in advance) of the user ID by the user through, for example, a manual operation 61 (step S41). At that time, a person who is going to use the mobile object 1 can now specify a user ID of his or her own.

When the identification of the user ID is made, the controller 80 may set a user mode corresponding to the user ID (step S42). The user mode may be an operation mode used by a specific user, and the threshold α1 may be set to correspond (stored in the memory 75) to the specific user in one or more embodiments of the present example.

Subsequently, the controller 80 may monitor whether the mobile object 1 is in a propelling state (step S43). When the mobile object 1 is in a propelling state (Y in step S43), the controller 80 may read a detected value of the current pressure sensor 72 (step S44).

Then, the controller 80 may determine whether the detected value of the pressure sensor 72 exceeds the threshold α1 (step S45). As a result of the determination, when the detected value does not exceed the threshold α1 (N in step S45), the controller 80 may repeat the operation of the step S43. On the other hand, when the detected value exceeds the threshold α1 (Y in step S45), the controller 80 may determine that the braking operation is activated (step S46) and execute the brake control operation (step S47).

By performing the brake control operation, the rotation of the motor 911 may decelerate gradually. When the rotation speed of the motor 911 (or the drive wheel 31) becomes zero or a sufficiently small value, the purpose of the brake control operation at that time is achieved.

Furthermore, the controller 80 may add the pressure value (detected value of the pressure sensor 72 when exceeding the threshold α1) to the history of the pressure value stored in the memory 75 (step S48). Accordingly, the history of the pressure value is modified.

Then, the controller 80 may update the threshold α1 based on the history of the latest pressure value so that if the pressure value tends to be lower, the threshold α1 may be lowered accordingly, and if the pressure value tends to be higher, the threshold α1 may be raised accordingly (step S49).

For example, the controller 80 may calculate a mean value for every value contained in the history, and this mean value (or a value obtained by adding a predetermined correction to the mean value) may become a new threshold α1. Accordingly, the threshold α1 stored in the memory 75 is updated, and the threshold α1, after being updated and newly set, will be reflected in the operation thereafter. Subsequently, the controller 80 may repeat the operation of step S43.

By performing the series of operations described above (steps S41 to S49), the braking operation can be easily carried out even by a weak user. Further, according to one or more embodiments of the present example, even if there are individual differences in the gripping strength of the users (differences such as sex, age, presence or absence of rheumatoid arthritis, or the like), the appropriate threshold α1 can be set for each user, and therefore, any user can comfortably use the mobile object 1.

Furthermore, according to one or more embodiments of the present example, the threshold α1 may be appropriately updated based on the history of the pressure value for each user. Therefore, even when a user's grip strength changes due to changes in the user's physical condition (e.g., aging) or when the mobile object 1 deteriorates through repeated use, the user can still use the mobile object 1 comfortably.

### 5. Fifth Example

Next, one or more embodiments of a fifth example will be described. In the following, a description will be given focusing on parts that are different from one or more embodiments of the first example, and the description of parts that are common is omitted.

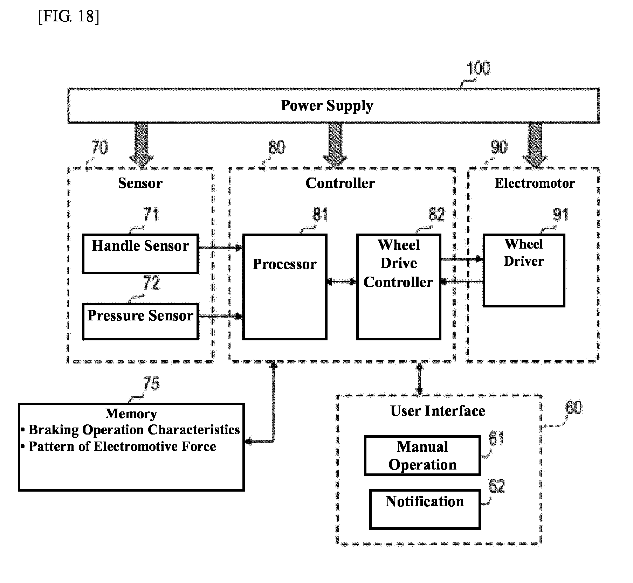

FIG. 18 is a functional block diagram of the mobile object 1 according to one or more embodiments of the fifth example. As illustrated in this diagram, a memory 75 may be provided in the mobile object 1 of one or more embodiments of the fifth example. The memory 75 may be configured by using, for example, non-volatile memory (such as flash memory) that is rewritable, and a variety of information is stored according to instructions by the controller 80.

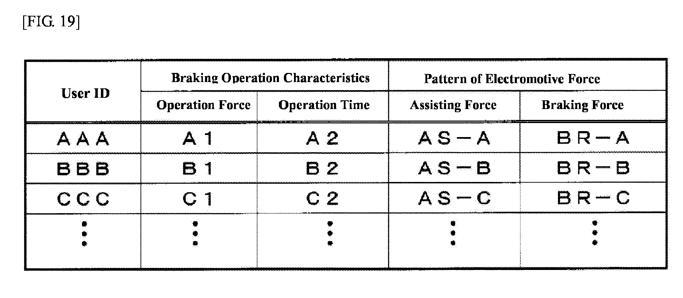

FIG. 19 schematically illustrates the information stored in the memory 75. As illustrated in the figure, information that relates to characteristics of the braking operation and a pattern of the electromotive drive force may be stored in the memory 75 for each of a plurality of user IDs that is registered in advance. In one or more embodiments of the present example, the plurality user IDs can be registered in this way at the initial setting on the assumption that a plurality of users share the mobile object 1.

In one or more embodiments of the present example, "operation strength" and "operation time" may be stored as information relating to characteristics of the braking operation. The "operation strength" may refer to the strength of the braking operation (strength of the gripping force). For example, a value of the "operation strength" may be the maximum value of the pressure sensor 72 or the mean value of the outputs of the pressure sensor 72 when the user has initiated a braking operation at the time of the initial setting or the like.

Further, "operation time" may refer to a time of the braking operation (length of time the strong gripping continues). For example, "operation time" may be a time in which the output value of the pressure sensor 72 continually exceeds the threshold α1 when the user has initiated a braking operation at the time of the initial setting or the like. Differences in the characteristics of the braking operation may exist among different users; therefore, the differences in "operation strength" and the "operation time" may be attributed to the specific user.

Further, "assisting force" and "braking force" may be stored in one or more embodiments of the present example as information relating to a pattern of the force of the electromotive drive. The assisting force may be a power assistance force when the mobile object is propelled. Further, the braking force may be the force of the brake when the brake control operation is performed by the braking operation.

The assisting force and the braking force may be set, for example, relatively weak for a user with a weak lower body, and relatively strong for a user with a strong lower body so that the mobile object 1 can be more safely and comfortably used. The assisting force and the braking force stored in the memory 75 are determined suitably, for example, by each user at the time of the initial setting so that each person can use the mobile object 1 comfortably.

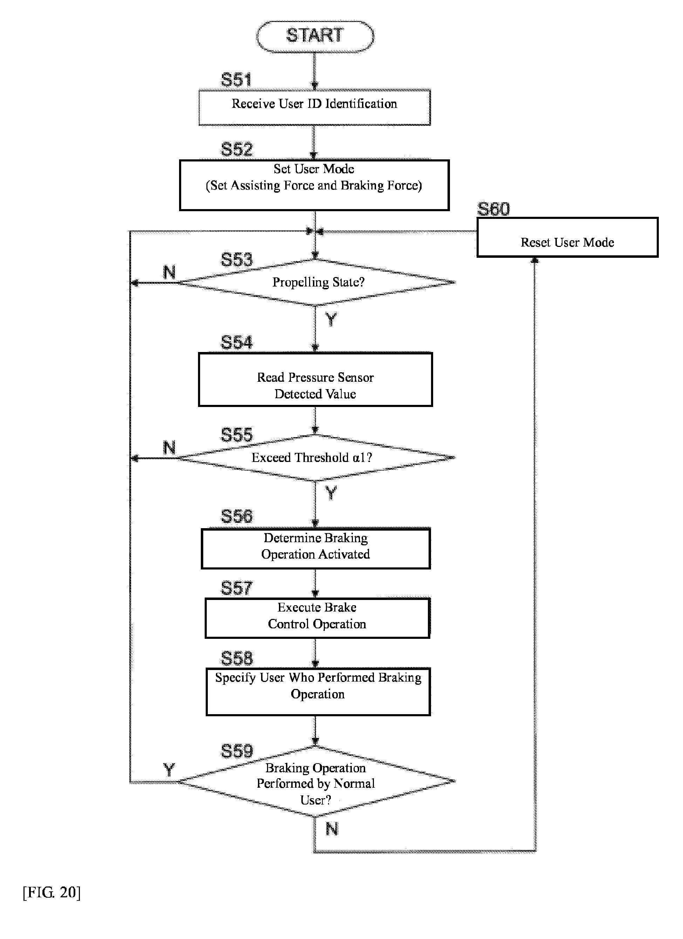

Next, a series of processes of a brake control operation according to one or more embodiments of the fifth example will be described with reference to a flowchart shown in FIG. 20.

The controller 80 may receive an identification (any one of identifications from all user IDs that are registered in advance) of the user ID by the user through, for example, a manual operation 61 (step S51). At that time, a person who is going to use the mobile object 1 can now identify or specify a user ID of his or her own.

When the identification of the user ID is made, the controller 80 may set a user mode corresponding to the user ID (step S52). The user mode may be an operation mode on the assumption of use by a specific user, and the assisting force and braking force may be set to correspond (stored in the memory 75) to the user in one or more embodiments of the present example.

The processes from step S51 to S52 may be omitted here. In this case, the assisting force and the braking force may be set to the initial set value determined in advance. In this way, the time and effort of a user to specify the user ID can be omitted. Even though the processes from step S51 to S52 are omitted in one or more embodiments of the present example, the user can be determined from the characteristics of the braking operation and a user mode corresponding to the user can be set automatically.

Subsequently, the controller 80 may monitor whether the mobile object 1 is in a propelling state (step S53). When the mobile object 1 is in a propelling state (Y in step S53), the controller 80 may read a detected value of the current pressure sensor 72 (step S54).

Then, the controller 80 may determine whether the detected value of the pressure sensor 72 exceeds the threshold α1 (step S55). As a result of the determination, when the detected value does not exceed the threshold α1 (N in step S55), the controller 80 may repeat the operation of the step S53. On the other hand, when the detected value exceeds the threshold α1 (Y in step S55), the controller 80 may determine that the braking operation is activated (step S56), and execute the brake control operation (step S57).

By performing the brake control operation, a motor 911 may reduce the rotation gradually. When the rotation speed of the motor 911 (or the drive wheel 31) becomes zero or a sufficiently small value, the purpose of the brake control operation at that time is achieved.

Further, the controller 80 may acquire information (information relating to characteristics of the current braking operation) corresponding to the "operation force" and "operation time" based on the output of the pressure sensor 72 when the current braking operation is performed. Then, the controller 80 may compare the information stored in the memory 75 and the acquired information to determine the user who has performed the current braking operation by determining which user has the most similar characteristics of the braking operation to the characteristics of the current braking operation (step S58).

Subsequently, the controller 80 may repeat the process of step S53 when the current braking operation is performed by the normal user (user of the current setting user mode) (Y in step S59). On the other hand, when the current braking operation is not performed by the normal user (N in step S59), the controller 80 may perform a resetting (change setting) of the user mode so that the user mode of the user who has performed the current braking operation is set (step S60). Thereafter, the controller 80 may repeat the operation of step S53.

The process of step S58 may be executed only when the difference between the characteristics of the current braking operation and the characteristics of the previous braking operation is relatively large. In this case, when the difference is relatively small, the controller 80 may consider that the current braking operation has been performed by the normal user, and the process of step S53 may be repeated by omitting the process of step S58.

By performing the series of operations described above (steps S51 to S60), the brake operation can be carried out even by a weak user. Further, according to one or more embodiments of the present example, an appropriate user mode (user mode appropriate to the current user) can be set automatically by using the differences of the braking operation by each user.

### 6. Other Examples

As described above, the mobile object 1 of each example (except one or more embodiments of the third example) may comprise a vehicle body 10, a grip 26 to be held by the user and is attached to the vehicle body 10, a pressure sensor 72 (detector) that detects a gripping force, a wheel system 30 used to propel the vehicle body 10, a wheel driver 91 that drives the wheel system 30 electrically (e.g. that drives at least one wheel of the wheel system 30 electrically), and a controller 80 that controls an electromotive drive to perform power assistance when the user walks while propelling or moving the vehicle body 10 by holding the grip 26.

The controller 80 may perform the brake control operation to decelerate the rotation speed of the wheel system 30 (e.g. to decelerate the rotation speed of at least one wheel of the wheel system 30) when the detected value of the pressure sensor 72 satisfies the predetermined condition. Therefore, the mobile object 1 may enable a braking operation while having the power-assist function.

Furthermore, in the mobile object 1 according to one or more embodiments of the first example, the controller 80 may perform the brake control operation when the detected value of the pressure sensor 72 exceeds a predetermined threshold α1 (first threshold). Therefore, the user can apply the braking operation even in urgent situations.

Furthermore, in the mobile object 1 according to one or more embodiments of the second example, the controller 80 may perform the brake control operation when the detected value of the pressure sensor 72 is lower than a predetermined threshold α2 (second threshold). Therefore, one or more embodiments of the present invention may safely prevent a situation where the mobile object 1 is driven against the will of the user.

Moreover, the mobile object 1 according to one or more embodiments of the fourth example may comprise a threshold setting unit that sets the threshold α1 to be updated. The threshold setting unit may store a history of the detected values of the pressure sensor 72 when the detected values exceed the threshold α1, and update the setting of the threshold α1 based on the history. Therefore, even when a user's grip strength changes due to changes in the user's physical condition (e.g., aging) or when the mobile object 1 deteriorates through repeated use, the user can still use the mobile object 1 comfortably.

The mobile object 1 may comprise a mode setting unit that sets any of a plurality of user modes, and the threshold setting unit sets the threshold α1 for each user mode. Therefore, even though there may be an individual difference in gripping strength by each user, any user can use the mobile object 1 comfortably.

Further, the mobile object 1 according to one or more embodiments of the fifth example may comprise a functional unit (mode setting unit) that sets any of a plurality of user modes. The mode setting unit may determine the user mode to be set based on reference information relating to the characteristics of the braking operation prepared in advance for each user mode and an output of the pressure sensor 72 when exceeding the threshold α1. Therefore, an appropriate user mode can be set automatically by using the differences of the braking operation by each user.

Furthermore, with the mobile object 1, a pattern of the electromotive drive force (e.g., assisting force and braking force) of the wheel system 30 may be determined by a controller, and the electromotive drive may be performed in accordance with the pattern of the set user mode. Therefore, even though an appropriate electromotive force is different by each user, any user can use the mobile object 1 comfortably.

Moreover, the mobile object 1 of one or more embodiments of the third example may comprise a vehicle body 10, a grip 26 held by a user attached to the vehicle body 10, a wheel system used for propelling or moving the vehicle 10, a wheel driver 91 that drives the wheel system 30 electrically, a brake lever 25 operated by the user when applying a wire brake, and a controller 80 that controls an electromotive drive to perform power assistance when the user walks while propelling or moving the vehicle body 10 by holding the grip 26.

In addition, the controller 80 may control the electromotor to decelerate the rotation speed of the wheel system 30 (e.g. to decelerate the rotation speed of at least one wheel of the wheel system 30) when the operation amount of the brake lever 25 exceeds the default value. Therefore, the controller may enable a braking operation while having the power-assist function. Furthermore, the controller may help prevent a situation where an opposing force is generated simultaneously such as applying the wire brake when the power assistance is performed.

A method for controlling the mobile object 1 by the controller 80 or the like may comprise, a first step that drives the wheel system 30 electrically to perform power assistance when the user walks while propelling or moving the vehicle body 10 by holding the grip 26, a second step that detects the gripping force, and a third step that controls the electromotive drive to decelerate the rotation speed of the wheel system 30 when the detected value satisfies the predetermined condition. In certain embodiments, the predetermined condition is satisfied when the detected value exceeds a first predetermined threshold α1, or when the detected value is lower than a second predetermined threshold α2. The method may comprise: storing a history of detected values that exceed the first predetermined threshold α1; and updating the first predetermined threshold α1 based on the history of the detected values. The method may comprise setting the first predetermined threshold to be a mean value of all detected values stored in the history. The method may comprise setting any of a plurality of user modes and setting the first predetermined threshold for each of the user modes. The method may comprise setting any of a plurality of user modes based on the detected value exceeding the first predetermined threshold and on predetermined reference information for each of the plurality of user modes. The method may comprise: determining a pattern of a driving force for each of the plurality of user modes; and driving the wheel system based on the pattern associated with each of the plurality of user modes.

A mobile object 1 was described as an example in various embodiments; however, the application of the present invention is not limited thereto and can be widely applied to even other manually propelled vehicles (such as baby carriages, dollies, wheelchairs, and the like).

The various technical features disclosed herein may have various modifications without departing from the scope of its technical creation other than the examples described above. The embodiments described above should be considered as examples only; the technical scope of the present invention is to be limited by the scope of claims only. Also, the features of these embodiments can be used in various combinations with each other, and are not intended to be limited to the specific combinations disclosed herein. Further, one of ordinary skill in the art would understand and appreciate that all modifications that have an equivalent meaning or fall within the scope of the claims are included. Furthermore, one or more embodiments of the present invention are applicable to manually propelled vehicles and the like. Furthermore, those of ordinary skill in the art would appreciate that certain "units," "parts," "elements," or "portions" of one or more embodiments of the present invention may be implemented by a circuit, processor, etc. using known methods.

### [Description of the Reference Numerals]

- 1: mobile object (e.g., ambulatory assist vehicle)
- 10: vehicle body
- 11: strut member
- 20: handle
- 21: handlebar
- 22: middle handle
- 23: handle holder
- 231: first contact surface (forward side)
- 232: second contact surface (rearward side)
- 233: guide pin
- 24: neutral holding section
- 25: brake lever
- 25a: pivotal axis
- 25b: brake wire
- 26 (26L, 26R): grip (left, right)
- 30: wheel system
- 31 (31L, 31R): drive wheel (left, right)
- 32 (32L, 32R): idler wheel (left, right)
- 40: baggage compartment
- 50: backrest
- 60: user interface
- 61: manual operation
- 62: notification
- 70: sensor
- 71: handle sensor
- 711 ∼ 714: first to fourth sensors
- 72 (72L, 72R): left side pressure sensor (left, right)
- 73: brake lever operation amount detector
- 75: memory
- 80: controller
- 81: processor
- 82: wheel drive controller
- 90: electromotor
- 91 (91L, 91R): wheel driver (left, right)
- 911 (911L, 911R): motor (left, right)
- 912 (912L, 912R): motor driver (left, right)
- 913 (913L, 913R): current sensor (left, right)
- 914 (914L, 914R): rotation angle sensor (left, right)
- 100: power supply

## Claims

1. A mobile object, comprising:
a vehicle body (10);
a grip (26) attached to the vehicle body;
a detector that detects a value of pressure applied to the grip by a user of the mobile object;
a wheel system (30) for moving the vehicle body;
a wheel driver (91) that drives the wheel system; and
a controller (80) that controls the wheel driver (91) as the user walks while holding onto the grip (26) and that performs braking to decelerate a rotation speed of the wheel system (30) when the detected value of the detector satisfies a predetermined condition.

2. The mobile object according to claim 1, wherein the detector is a pressure sensor (72) provided on the grip (26).

3. The mobile object according to claim 1 or 2, wherein the predetermined condition is satisfied when the detected value exceeds a first predetermined threshold (α1).

4. The mobile object according to claim 1 or 2, wherein the predetermined condition is satisfied when the detected value is lower than a second predetermined threshold (α2).

5. The mobile object according to claim 3, wherein the first predetermined threshold (α1) is updated based on a history of detected values that exceed the first predetermined threshold (α1).

6. The mobile object according to claim 5, wherein the first predetermined threshold (α1) is a mean value of all the detected values stored in the history.

7. The mobile object according to claim 5 or 6, wherein the first predetermined threshold (α1) is set for each of a plurality of user modes.

8. The mobile object according to claim 3, wherein a plurality of user modes is set based on an output of the detector that exceeds the first predetermined threshold (α1) and on predetermined reference information for each of the plurality of user modes.

9. The mobile object according to claim 8, wherein
the controller (80) determines a pattern of a driving force for each of the plurality of user modes, and
the wheel driver (91) drives the wheel system (30) based on the pattern associated with each of the plurality of user modes.

10. A mobile object, comprising:
a vehicle body (10);
a grip (26) attached to the vehicle body;
a wheel system (30) for moving the mobile object;
a wheel driver (91) that drives the wheel system;
a brake lever (25) operated by the user when applying a wire brake; and
a controller (80) that controls the wheel driver (91) as the user walks while holding onto the grip (26) and that performs braking to control to decelerate a rotation speed of the wheel system (30) when a detected value of the brake lever (25) exceeds a default value.

11. The mobile object according to claim 10, wherein the braking is an operation to set a target rotation speed of a motor (911) driving the wheel system (30) to zero.

12. A control method for controlling a mobile object comprising a vehicle body (10), a grip (26) attached to the vehicle body to be gripped by a user walking with the mobile object (1), and a wheel system (30) for moving the mobile object (1), the control method comprising:
driving the wheel system (30) as the user walks while holding onto the grip (26);
detecting a value of pressure applied to the grip (26); and
controlling the driving to decelerate a rotation speed of the wheel system (30) when the detected value satisfies a predetermined condition.

13. The method according to claim 12, wherein the predetermined condition is satisfied when the detected value exceeds a first predetermined threshold (α1).

14. The method according to claim 12, wherein the predetermined condition is satisfied when the detected value is lower than a second predetermined threshold (α2).

15. The method according to claim 13, further comprising:
storing a history of detected values that exceed the first predetermined threshold (α1); and
updating the first predetermined threshold (α1) based on the history of the detected values.
